# EUROPÄISCHE PATENTSCHRIFT

(11) **EP 0 762 682 B1**
(45) Veröffentlichungstag und Bekanntmachung des Hinweises auf die Patenterteilung: **29.03.2006**
(21) Anmeldenummer: 96113040.8
(22) Anmeldetag: 14.08.1996
(51) Int. Cl.: H04H 1/00, H04N 7/16, H04Q 9/00

(54) **Endgerät für den Empfang digitaler Rundfunksignale**
Terminal for receiving digital broadcast signals
Terminal pour la réception de signaux de radiodiffusion numérique

(30) Priorität: 02.09.1995 DE 19532503
(43) Veröffentlichungstag der Anmeldung: 12.03.1997
(73) Patentinhaber: Grundig Multimedia B.V., 1083HJ Amsterdam (NL)
(72) Erfinder: Ruelberg, Klaus, Dr.-Ing., Grundig E.M.V., 90762 Fürth (DE)
(74) Vertreter: Pröll, Jürgen

(56) Entgegenhaltungen:
- WO-A-89/06079
- WO-A-94/13107
- US-A- 3 980 954
- US-A- 4 517 562
- US-A- 4 749 992
- US-A- 4 940 976
- G. KLEINE: "Die Einführung des digitalen Fernsehens" ELEKTOR, Nr. 9, September 1995 (1995-09), Seiten 60-67, XP000941473

## Beschreibung

Die Erfindung betrifft ein Endgerät für den Empfang digitaler Rundfunksignale, denen im Sender zusätzliche digitale Daten hinzugefügt werden, mit den im Oberbegriff des Anspruchs 1 angegebenen Merkmalen.

Derzeit erfolgt in der Femseh- und Radiotechnik der Übergang von analogen zu digitalen Übertragungssystemen. In diesem Zusammenhang wird auch die Satelliten- und Kabelübertragung umgestellt. In der Femsehtechnik ermöglicht beispielsweise ein Quellencodierverfahren nach dem MPEG-Standard eine Datenkompression, die eine besonders effiziente Übertragung zuläßt. Während in der analogen Technik auf einem Satellitentransponder von beispielsweise 33 MHz Bandbreite bisher ein Fernsehprogramm übertragen wird, ist mit der digitalen Technik eine Verteilung von 5 - 10 Programmen gleicher Qualität auf dem gleichen Transponder möglich.

Diese Vielfalt von Programmen erfordert einen Multiplex mit geeigneter Verwaltung der Daten. Auch dieser Aspekt ist im MPEG-Standard geregelt. Dazu ist vorgesehen, die Datenströme in Blöcke aufzuteilen, die im Zeitmultiplex übertragen werden. Ein Programm besteht aus mehreren Datenströmen unterschiedlicher Art (Videoinformation, Audioinformation, Hilfsinformation), den sogenannten elementaren Datenströmen. Die elementaren Datenströme eines Programms werden in einem Programmultiplexer zu einem Programmdatenstrom zusammengefügt. Verschiedene Programmdatenströme werden in einem Transportmultiplexer zum Transportdatenstrom zusammengesetzt. Die einzelnen Datenblöcke, die beispielsweise eine Länge von 188 Bytes haben können, werden jeweils mit Synchronisations- und Identifikationsbits versehen, um dem Empfänger die Auswahl der richtigen Blöcke zur Decodierung und Darstellung der Information auf einem Fernsehempfänger zu ermöglichen.

Durch die starke Datenkompression und die eindeutige Identifizierung der einzelnen Datenblöcke durch Synchronisations- und Identifikationsbits ist es prinzipiell möglich, dem Transportdatenstrom zusätzliche digitale Daten hinzuzufügen, um mit dem Endgerät für den Empfang digitaler Rundfunksignale zusätzliche Funktionen ausführen zu können. Derartige zusätzliche digitale Daten steuern beispielsweise die Umschaltung des Darstellungsformats von einem Seitenverhältnis von 4:3 auf ein Seitenverhältnis von 16:9.

Ein eingangs beschriebenes Endgerät für den Empfang von digitalen Rundfunksignalen nach dem MPEG2-Standard ist beispielsweise aus dem Aufsatz "Die Einführung des digitalen Fernsehens", von G. Kleine, erschienen in Elektor 9/95, Seiten 60-67, bekannt. Das beschriebene Endgerät verfügt zudem über einen Rückkanal, über den es mit einer Zentrale verbunden ist.

Aus der DE 31 40 960 A1 ist zudem eine Vorrichtung für eine über einen Rückkanal informationsgesteuerte HF-Übertragung digitaler Meßdaten von einer mobilen Sendestation zu einer ortsfesten Empfangsstation bekannt

Aus US-A-4 517 562 ist ein Endgerät zum Empfang von Rundfunksignalen bekannt. Es sind Messmittel beim Gerät vorgesehen, um die empfangenen Signale zu beurteilen.

Aus G. Kleine: "Die Einführung des digitalen Fernsehens" ELEKTOR, Nr. 9, September 1995 (1995-09), Seiten 60 - 67 ist eine Beschreibung zur Einführung des digitalen Femsehens via das Breitbandkabelnetz der Deutschen Telekom offenbart. Hierbei wird unter anderem die Etablierung eines Rückkanals offenbart.

Ausgehend von diesem Stand der Technik liegt der Erfindung die Aufgabe zugrunde, ein Endgerät für den Empfang digitaler Rundfunksignale, denen im Sender zusätzliche digitale Daten hinzugefügt werden, anzugeben, welches, gesteuert durch zusätzliche digitale Daten, am Ort des Endgeräts befindliche Meß-oder Erfassungsstellen auswertet.

Diese Aufgabe wird bei einem Endgerät für den Empfang digitaler Rundfunksignale durch die im Anspruch 1 angegebenen Merkmale gelöst. Vorteilhafte Weiterbildungen ergeben sich aus den abhängigen Ansprüchen und der nachfolgenden Beschreibung.

Die Vorteile der Erfindung bestehen insbesondere darin, daß mit einem erfindungsgemäßen Endgerät die individuelle Auswertung von Meß- oder Erfassungsstellen mittels nahezu überall verfügbarer Rundfunksignale möglich ist.

Im folgenden wird ein Ausführungsbeispiel für die Erfindung anhand von Figuren näher erläutert.

Es zeigt:
Figur 1 ein Blockschaltbild eines erfindungsgemäßen Endgeräts für digitale Rundfunksignale.
Figur 2 ein Prinzipschaltbild des Aufbaus eines Senders für digitale Rundfunksignale und einer Auswertungsstelle für das erfindungsgemäße Endgerät.

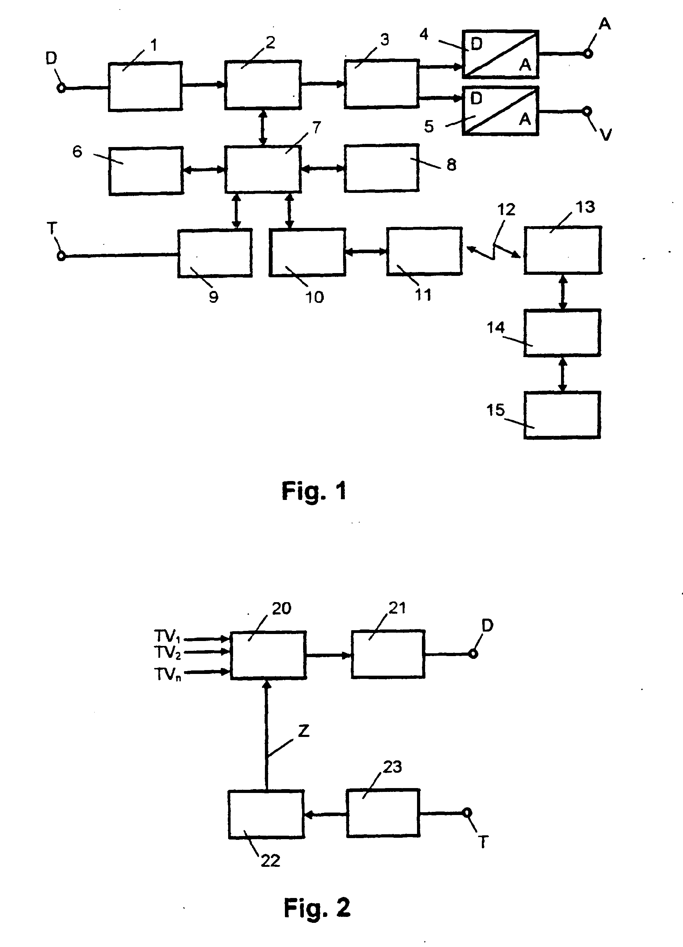

Das in Figur 1 dargestellte Blockschaltbild eines erfindungsgemäßen Endgeräts weist eine Empfangseinrichtung 1, einen damit verbundenen Demultiplexer 2 einen Decoder 3, Digital/Analog-Wandler 4 und 5, eine Einrichtung 6 zur Überprüfung der Zugangsberechtigung des Endgeräts zu bestimmten Datenströmen und einen Steuerrechner 7, der beispielsweise von einem Mikrocomputer gebildet werden kann, mit zugehörigem Speicher 8 auf.

Das Prinzipschaltbild nach Figur 2 weist einen Multiplexer 20, der mehrere Programmdatenströme TV₁ bis TVₙ zu einem Transportdatenstrom zusammenfaßt, und einen Sender 21 auf, der den Transportdatenstrom als entsprechend moduliertes digitales Rundfunksignal D sendet.

Die Empfangseinrichtung 1 verarbeitet das vom Sender 21 empfangene digitale Rundfunksignal D und gewinnt den vom Multiplexer 20 stammenden Transportdatenstrom zurück. Aus dem Transportdatenstrom wird, unter Steuerung des Steuerrechners 7, vom Demultiplexer 2 der Programmdatenstrom aus dem Tansportdatenstrom abgezweigt, der dem vom Benutzer ausgewählten Programm entspricht. Dabei wird vom Steuerrechner 7 überprüft, ob der Benutzer, beispielsweise beim Empfang eines Pay-TV-Programms, zum Empfang berechtigt ist. Dazu werden die in der Einrichtung 6 zur Überprüfung der Zugangsberechtigung beispielsweise auf einer Smart-card gespeicherten Informationen vom Steuerrechner 7 ausgewertet und mit den entsprechenden Informationen (Identifikationsbits) des jeweiligen Programmdatenstroms verglichen. Im Decoder 3 werden aus dem Programmdatenstrom die digitalen Bild- und Tonsignale des übertragenen Fernsehprogramms gewonnen und von den Digital/Analog-Wandlern 4 und 5 zur Darstellung in analoge Bildsignale V und Tonsignale A umgewandelt.

Weiterhin weist das Endgerät ein Telefonmodem 9, das am öffentlichen Telefonnetz T angeschlossen ist, eine Codier- und Decodiereinrichtung 10 sowie eine Übertragungsseinrichtung 11 auf. Mittels der Übertragungseinrichtung 11 besteht eine Verbindung 12 zu mindestens einer weiteren Übertragungseinrichtung 13, die über eine Codier- und Decodiereinrichtung 14 mit einer Meß- oder Erfassungseinrichtung 15, welche beispielsweise Verbrauchsdaten von Gas, Wasser oder Strom ermittelt, verbunden ist.

Weiterhin weist das Prinzipschaltbild nach Figur 2 eine zentrale Auswertungsstelle 22, die beispielsweise von einem Computer mit geeigneter Software gebildet werden kann, und ein am öffentlichen Telefonnetz T angeschlossenes Modem oder Interface 23 auf.

Von der zentralen Auswertungsstelle 22 werden zusätzliche Daten Z generiert und vom Multiplexer 20 dem Transportdatenstrom hinzugefügt. Die zusätzlichen Daten Z enthalten Steuerinformationen, welche die einzelnen Meß- oder Erfassungseinrichtungen 15 adressieren. Außerdem enthalten die zusätzlichen Daten Z eine individuelle Adresse des Benutzers bzw. Endgeräts und eine Zugangsberechtigungsinformation. Werden nach dem Empfang der digitalen Rundfunksignale D in der Empfangseinrichtung 1 vom Demultiplexer 2 anhand der individuellen Adresse zusätzliche Daten Z erkannt, die für das Endgerät bestimmt sind, überprüft der Steuerrechner 7 mittels der in der Einrichtung 6 zur Überprüfung der Zugangsberechtigung und der in den zusätzlichen Daten Z enthaltenen Zugangsberechtigungsinformation, ob eine Berechtigung vorliegt, die Steuerinformationen an die adressierten Meß- oder Erfassungseinrichtungen 15 weiterzugeben. Die Übertragungseinrichtungen 11 und 13 treten dann über einen Ubertragungskanal 12 miteinander in Verbindung. Vom Steuerrechner 7 werden die Steuerinformationen an die adressierte Meß- oder Erfassungseinrichtung 15 übertragen. Die in der Meß- oder Erfassungseinrichtung 15 ermittelten Daten werden anschließend dem Steuerrechner 7 übermittelt, der die Daten mittels des Telefonmodems 9 über das öffentliche Telefonnetz an das Interface 23 der zentralen Auswertungsstelle 22 überträgt. Von der Auswertungsstelle werden mit diesen Daten beispielsweise Rechnungen erstellt.

Neben den genannten Bestandteilen der zusätzlichen Daten Z können diese außerdem informationen enthalten, welche den Zeitpunkt der Übertragung der Daten über das öffentliche Telefonnetz T oder die vom Modem 9 zu wählende Telefonnummer festlegen. Soll die Übertragung der Daten erst zu einem späteren Zeitpunkt erfolgen, können die ermittelten Daten im Speicher 8 bis zum Zeitpunkt der Übertragung zwischengespeichert werden. Darüber hinaus können die Steuerinformationen an die einzelnen Meß- oder Erfassungsstellen 15 neben der Datenauswertung andere Vorgänge auslösen, beispielsweise können einzelnen Geräte ein-, um- oder ausgeschaltet werden.

Zur Übertragung der ermittelten Daten am Ort des Endgeräts bietet es sich besonders an, den Übertragungskanal 12 als Funkverbindung, beispielsweise nach dem DECT-Standard, auszubilden. Eine weitere Mögtichkeit, welche eine zusätzliche Verkabelung überflüssig macht, ist eine Verbindung über das Stromversorgungsnetz. Besonders im letztgenannten Fall müssen Maßnahmen ergriffen werden, welche Fehladressierungen vermeiden, wie sie sich ergeben können, wenn am gleichen Stromversorgungsnetz, z. B. in einem Haus, mehrere Endgeräte vorhanden sind. Für diesen Fall sind die Codier- und Decodiereinrichtungen 10 und 14 vorgesehen, welche die über den Übertragungskanal 12 übertragenen Daten ver- und entschlüsseln. Besonders worteilhaft kann zu dieser Verschlüsselung der in der Einrichtung 6 zur Zugangskontrolle vorhandene Schlüssel bzw. Algorithmus verwendet werden. Um diesen Schlüssel auch in der Codier und Decodiereinrichtung 14, die nicht direkt mit dem Steuerrechner 7 des Endgeräts verbunden ist, zur Verfügung zu stellen, kann beispielsweise während der ersten Inbetriebnahme einer Außeneinheit, bestehend aus Übertragungseinrichtung 13, Codier und Decodiereinrichtung 14 und Meß- oder Erfassungseinrichtung 15, eine Initialisierung vorgenommen werden. Dabei wird die oben erwähnte Speicherkarte (Smart-card) aus der Einrichtung 6 zur Zugangskontrolle entfernt und kurzzeitig in ein entsprechendes Lesegerät, welches an der Außeneinheit vorhanden ist oder angeschlossen werden kann, eingeführt. Nach der Initialisierung aller Außeneinheiten wird die Speicherkarte wieder in das entsprechende Lesegerät des Endgeräts eingeführt.

Neben Außeneinheiten wie in Figur 1 dargestellt, die jeweils aus Übertragungseinrichtung 13, Codier- und Decodiereinrichtung 14 und Meß- oder Erfassungseinrichtung 15 bestehen, können an eine Übertragungseinrichtung 13 und eine Codier- und Decodiereinrichtung 14 auch mehrere Meß- oder Erfassungseinrichtungen 15 angeschlossen sein.

Die Übertragung der digitalen Rundfunksignale D kann über alle bekannten Übertragungskanäle, nämlich terrestrischer Funk, Satellitenfunk oder Kabel erfolgen. Falls der Übertragungskanal der digitalen Rundfunksignale D es ermöglicht, kann dieser zugleich den Rückkanal für die ermittelten Daten bilden. Eine Benutzung des öffentlichen Telefonnetzes ist dann überflüssig, Modem 9 und Intereface 22 müssen entsprechend dem dann verwendeten Übertragungskanal angepaßt werden.

## Patentansprüche

1. Endgerät für den Empfang digitaler Rundfunksignale, denen im Sender zusätzliche Daten hinzugefügt werden, mit einer Empfangseinrichtung (1) für verschiedene Datenströme enthaltende digitale Rundfunksignale, einem Demultiplexer (2) zur Trennung der Datenströme, einem Steuerrechner (7) zur Steuerung des Endgeräts, und einer Einrichtung (6) zur Überprüfung der Zugangsberechtigung des Endgeräts zu den einzelnen Datenströmen, wobei das Endgerät außerdem eine Übertragungseinrichtung (11,13) aufweist, welche das Endgerät mit am Ort des Endgeräts vorhandenen Mess- oder Erfassungseinrichtungen (15) verbindet, die zusätzlichen digitalen Daten Informationen enthalten, welche die Mess- oder Erfassungseinrichtungen (15) zu deren Auswertung adressieren, der Steuerrechner (7) nur dann eine Auswertung der Mess- oder Erfassungseinrichtungen (15) über die Übertragungseinrichtung (11,13) veranlasst, wenn er die Zugangsberechtigung der zusätzlichen digitalen Daten bei Überprüfung durch Einrichtung (6) feststellt, woraufhin er die ermittelten Werte der Mess- oder Erfassungseinrichtungen (15) über einen Rückkanal (9, T) an eine zentrale Auswertungsstelle (22) übermittelt.

2. Endgerät nach Anspruch 1,
derart ausgestaltet, dass
Codier- und Decodiereinrichtungen (10, 14) die Datenübertragung zwischen Endgerät und Meß- oder Erfassungseinrichtungen (15) verschlüsseln.

3. Endgerät nach Anspruch 2,
derart ausgestaltet, dass
die Codier- und Decodiereinrichtungen (10,14) anhand des in der Einrichtung (6) zur Überprüfung der Zugangsberechtigung verwendeten Codeschlüssel codieren und decodieren.

4. Endgerät nach Anspruch 3,
derart ausgestaltet, dass
der Steuerrechner (7) den Codeschlüssel der Einrichtung (6) zum Überprüfen der Zugangsberechtigung auf einer aus dem Endgerät entfernbaren Speicherkarte speichert, wobei die Steuereinheit (7) einem Initialisierungslauf nur vomimmt, wenn die Speicherkarte nicht im Endgerät vorhanden ist, und nur dann die Codier- und Decodiereinrichtung (14) der jeweiligen Mess- oder Erfassungseinrichtung (15) initialisiert.

5. Endgerät nach einem der Ansprüche 1 bis 4,
derart ausgestaltet **dass**
der Rückkanal (9, T) zur Übertragung der Werte der Mess- oder Erfassungseinrichtungen (15) identisch mit dem Übertragungskanal des digitalen Rundfunksignals ist.

6. Endgerät nach einem der Ansprüche 1 bis 4,
derart ausgestaltet **dass**
die Steuereinheit (7) den Rückkanal (9, T) zur Übertragung der Werte der Mess- oder Erfassungseinrichtungen (15) über ein Telefonnetz (T) und ein an dieses Telefonnetz angeschlossenes Telefonmodem (9) realisiert.

7. Endgerät nach einem der Ansprüche 1 bis 6,
derart ausgestaltet **dass**
die Übertragungseinrichtung (11,13) einen drahtgebundenen Übertragungskanal (12) aufweist, wobei dieser als eine Verbindung über das Stromversorgungsnetz realisiert ist.

8. Endgerät nach einem der Ansprüche 1 bis 6,
derart ausgestaltet **dass**
die Übertragungseinrich ung (11,13) einen drahtlosen Übertragungskanal (12) aufweist, wobei der drahtlosen Übertragungskanal (12) nach dem DECT-Standard realisiert ist.

## Claims

1. Terminal for receiving digital radio signals to which additional data have been added in the transmitter, comprising a receiving device (1) for various data streams containing digital radio signals, a demultiplexer (2) for separating the data streams, a control computer (7) for controlling the terminal and a device (6) for checking the access authorization of the terminal for the individual data streams, wherein the terminal has, in addition, a transmission device (11,13) that connects the terminal to measuring or acquisition devices (15) present at the location of the terminal, the additional digital data contain information items that address the measuring or acquisition devices (15) for the purpose of evaluating them, the control computer (7) initiates an evaluation of the measuring or acquisition devices (15) via the transmission device (11, 13) only if it detects the access authorization of the additional digital data during checking by device (6), whereupon it communicates the values determined in the measuring or acquisition devices (15) to a central evaluation point (22) via a return channel (9, T).

2. Terminal according to Claim 1, so designed that encoding and decoding devices (10, 14) encode the data transmission between the terminal and the measuring or acquisition devices (15).

3. Terminal according to Claim 2, so designed that the encoding and decoding devices (10, 14) encode and decode on the basis of the code key used in the device (16) for checking the access authorization.

4. Terminal according to Claim 3, so designed that the control computer (7) stores the code key of the device (6) for checking the access authorization on a memory card that can be removed from the terminal, wherein the control unit (7) performs an initialisation run only if the memory card is not present in the terminal and only then initialises the encoding and decoding device (14) of the respective measuring or acquisition device (15).

5. Terminal according to any one of Claims 1 to 4, so designed that the return channel (9, T) for transmitting the values of the measuring or acquisition devices (15) is identical to the transmission channel of the digital radio signal.

6. Terminal according to any one of Claims 1 to 4, so designed that the control unit (7) implements the return channel (9, T) for transmitting the values of the measuring or acquisition devices (15) by means of a telephone network (T) and a telephone modem (9) connected to said telephone network.

7. Terminal according to Claims 1 to 6, so designed that the transmission device (11, 13) has a wire-connected transmission channel (12), wherein the latter is implemented as a connection via the power supply system.

8. Terminal according to any one of Claims 1 to 6, so designed that the transmission device (11, 13) has a wireless transmission channel (12), wherein the wireless transmission channel (12) is implemented according to the DECT standard.

## Revendications

1. Terminal pour la réception de signaux radio numériques, auxquels des données supplémentaires sont ajoutées dans l'émetteur, équipé d'un dispositif de réception (1) pour des signaux radio numériques contenant différents flux de données, un multipléxeur (2) pour séparer les flux de données, un ordinateur de commande (7) pour commander le terminal, et un dispositif (6) pour contrôler le droit d'accès du terminal aux flux de données individuels, où le terminal présente en outre un dispositif de transmission (11, 13), qui relie le terminal à des dispositifs de mesure ou de détection (15) présents à l'endroit du terminal, qui contiennent des informations concernant les données numériques supplémentaires, qui adressent les dispositifs de mesure ou de détection (15) pour leur évaluation, l'ordinateur de commande (7) effectue alors une évaluation des dispositifs de mesure ou de détection (15) par l'intermédiaire du dispositif de transmission (11, 13), lorsqu'il définit le droit d'accès aux données numériques supplémentaires lors du contrôle par le dispositif (6), après quoi il transmet les valeurs recherchées des dispositifs de mesure ou de détection (15) par l'intermédiaire d'un canal de retour (9, T) à un poste d'évaluation central (22).

2. Terminal selon la revendication 1, réalisé de sorte que des dispositifs de codage et de décodage (10, 14) verrouillent la transmission de données entre le terminal et les dispositifs de mesure ou de détection (15).

3. Terminal selon la revendication 2, réalisé de sorte que les dispositifs de codage et de décodage (10, 14) codent et décodent grâce à la clé de code utilisée dans le dispositif (6) en vue du contrôle de droit d'accès.

4. Terminal selon la revendication 3, réalisé de sorte que l'ordinateur de commande (7) mémorise la clé de code du dispositif (6) pour contrôler le droit d'accès sur une carte mémoire pouvant être retirée du terminal, où l'unité de commande (7) exécute un cycle d'initialisation seulement lorsque la carte mémoire n'est pas présente dans le terminal, et seulement ensuite initialise le dispositif de codage et de décodage (14) du dispositif respectif de mesure ou de détection (15).

5. Terminal selon l'une des revendications 1 à 4, réalisé de sorte que le canal de retour (9, T) pour la transmission des valeurs des dispositifs de mesure ou de détection (15) est identique au canal de transmission du signal radio numérique.

6. Terminal selon l'une des revendications 1 à 4, réalisé de sorte que l'unité de commande (7) réalise le canal de retour (9, T) pour la transmission des valeurs des dispositifs de mesure ou de détection (15) par l'intermédiaire d'un réseau téléphonique (T) et d'un modem téléphonique (9) relié à ce réseau téléphonique.

7. Terminal selon l'une des revendications 1 à 6, réalisé de sorte que le dispositif de transmission (11, 13) présente un canal de transmission câblé (12), où celui-ci est réalisé sous la forme d'une liaison par l'intermédiaire du réseau d'alimentation électrique.

8. Terminal selon l'une des revendications 1 à 6, réalisé de sorte que le dispositif de transmission (11, 13) présente un canal de transmission radio (12), où le canal de transmission radio (12) est réalisé selon le standard DECT.
